# EUROPÄISCHE PATENTSCHRIFT

(11) **EP 1 599 305 B1**
(45) Veröffentlichungstag und Bekanntmachung des Hinweises auf die Patenterteilung: **19.08.2009**
(21) Anmeldenummer: 04713538.9
(22) Anmeldetag: 23.02.2004
(51) Int. Cl.: B23B 49/02

(54) **VERFAHREN UND VORRICHTUNG ZUR KONTROLLE DER POSITION VON BOHRHÜLSEN**
METHOD AND DEVICE FOR CONTROLLING THE POSITION OF BORE BUSHINGS
PROCEDE ET DISPOSITIF DE VERIFICATION DE LA POSITION DE DOUILLES DE GUIDAGE

(30) Priorität: 28.02.2003 DE 10309992
(43) Veröffentlichungstag der Anmeldung: 30.11.2005
(73) Patentinhaber: med3D GmbH, 69120 Heidelberg (DE)
(72) Erfinder: STEIN, Wolfram, 69120 Heidelberg (DE); SCHOBER, Florian, CH-08006 Zürich (CH); BLÜMCKE, Leonhard, 74909 Meckesheim (DE)
(74) Vertreter: Gleiss, Alf-Olav
(86) Internationale Anmeldenummer: PCT/EP2004/001750
(87) Internationale Veröffentlichungsnummer: WO 2004/076106

(56) Entgegenhaltungen:
- WO-A-99/32045
- FR-A- 2 706 281
- FR-A- 2 778 457
- FR-E- 78 036
- US-A- 5 133 660
- US-A- 5 222 892

## Beschreibung

Die Erfindung betrifft ein Verfahren und eine Vorrichtung zur Kontrolle der Position von Bohrhülsen in Bohrschablonen, die im Bereich der Zahnimplantation Verwendung finden und dazu dienen, einen Bohrer zu führen, der dazu verwendet wird, in den Kieferknochen eines Patienten Bohrungen einzubringen, um dort Implantate zu verankern.

Bohrschablonen der hier angesprochenen Art werden in der Regel auf folgende Weise hergestellt: Zunächst erstellt ein Zahnarzt einen Abdruck eines Patientenkiefers. Der Abdruck wird dazu verwendet, ein Gipsmodell zur Erstellung einer Bissschiene herzustellen. Diese trägt der Patient bei einer computertomographischen Erfassung seines Kiefer, die dazu dient, eine dreidimensionale Implantatsplanung durchzuführen. Damit eine Rückübertragung der Planung auf den Patienten ermöglicht wird, enthält die Bohrschablone typischerweise Registriermarkierungen. Bei dieser Planung wird sichergestellt, dass die Implantate so im Kieferknochen angeordnet werden, dass bei der Einbringung der erforderlichen Bohrungen für die Implantate keine Nerven geschädigt werden oder eine Perforation der Nasennebenhöhlen erfolgt. Nach Festlegung des Verlaufs und der Anordnung der Bohrkanäle sowie der Bohrtiefe im Kieferknochen werden in die Bissschiene Bohrhülsen eingebracht, die vorzugsweise aus Titan bestehen und so angeordnet sind, dass sie der Führung eines Bohrers dienen können, mit dessen Hilfe die geplanten Bohrkanäle in den Kiefer eingebracht werden. Dabei dient die Winkelanordnung der Bohrhülsen dazu, den Bohrkanal in der gewünschten Ausrichtung in den Kieferknochen einbringen zu können. Die Bohrtiefe wird durch den als Anschlag für den Bohrer dienende Rand der Bohrhülse festgelegt, der deren Einlass umgibt, in den später ein Bohrer eingeführt wird.

Die mit den Bohrhülsen versehene Bissschiene, die nun als Bohrschablone dient, wird einem Patienten eingesetzt, der ein oder mehrere Implantate erhalten soll. Die in der Bissschiene beziehungsweise Bohrschablone fest eingebrachten Bohrhülsen dienen dem Arzt nun als mechanische Führung und als Anschlag für einen Bohrer, mit dem Löcher in den Kiefer eingebracht werden, die der Aufnahme von Im-plantaten dienen, (siehe z.B. WO 99 32045). FR 78 036 E offenbart ein Verfahren gemäß dem Oberbegriff des Anspruchs 1.

Es hat sich herausgestellt, dass bei der Einbringung von Bohrhülsen in die Bissschiene also bei der Herstellung der Bohrschablone Abweichungen zur Planung bezüglich der Lage der Bohrhülsen auftreten können, z. B. durch menschliche Bedienungsfehler. Außerdem können die Bohrhülsen in axialer Richtung falsch in die als Bohrschablone dienende Bissschiene eingebracht werden. Grobe Fehler vermag der Arzt möglicherweise anhand der Anordnung der Bohrhülsen und eines Vergleichs mit den mittels Computertomographie erstellten Bilder feststellen. Sicher können aber auf diese Weise nicht alle Fehler erfasst werden, so dass Patienten insofern gefährdet sind, als die Orientierung der in den Kiefer eingebrachten Bohrungen für die Implantate und die Tiefe der Bohrungen manchmal falsch vorherbestimmt sind.

Nachfolgend sind mit "Lage" jeweils im Bezug auf ein definiertes Koordinatensystem die im Folgenden als Lageparameter bezeichneten Parameterwerte der 6 Freiheitsgrade eines starren Objektes im dreidimensionalen Raum gemeint.

Bei einer rotationssymmetrischen Hülse wird die Lage entsprechend durch 5 Parameter eindeutig beschrieben.

Ein abgeleiteter Lageparameter entsteht durch Umrechnung aus Parameterwerten eines anderen Koordinatensystem oder durch Projektion der Parameterwerte in ein neues Koordinatensystem.

Synonym für Lageparameter bzw. für eine Untermenge der Lageparameter werden hier die Begriffe "Winkel- und/oder Axialposition" verwendet.

Aufgabe der Erfindung ist es daher, ein Verfahren und eine Vorrichtung zur einfachen Kontrolle der Position von in eine Bohrschablone eingesetzten Bohrhülsen zur Verfügung zu stellen.

Zur Lösung dieser Aufgabe wird ein Verfahren vorgestellt, das sich dadurch auszeichnet, dass ein Teil der Lageparameter oder der abgeleiteten Lageparameter der Bohrhülsen in der Bohrschablone erfasst wird. Dabei werden die Positionen in einem Abstand zur Bohrschablone gemessen, insbesondere, um eine hohe Messsicherheit und eine einfache Messung zu ermöglichen.

Besonders bevorzugt wird ein Verfahren, das sich dadurch auszeichnet, dass die Messung in einer Messebene erfolgt, wobei dieser eine Referenzaufnahme zugeordnet wird. Die Referenzaufnahme dient dazu, die Bohrschablone in einer definierten Position gegenüber der Messebene zu halten, und dazu, die (abgeleiteten) Lageparameter der Bohrhülsen erfassen zu können.

Bevorzugt wird weiterhin eine Ausführungsform des Verfahrens, bei dem Messstifte durch die Bohrhülsen geführt und die Berührungspunkte der Messstifte mit der Messebene erfasst werden. Durch einen Vergleich der Berührungspunkte mit Referenzpunkten, die in der Messebene liegen, kann festgestellt werden, ob die Bohrhülsen korrekt in die Bohrschablone eingesetzt wurden.

Bei einer bevorzugten Ausführungsform des Verfahrens werden die Messstifte mit Messpunkten versehen, um feststellen zu können, ob die als Anschlag dienenden Enden der Bohrhülsen in korrekter Axialposition angeordnet sind. Wenn beispielsweise die Messpunkte ihrerseits als Anschlag ausgebildet sind, können bei zu hoch eingesetzten Bohrhülsen die Messstifte die Messebene nicht erreichen. Damit kann der Arzt ohne weiteres feststellen, dass die Bohrhülse in einer falschen Axialposition angeordnet ist. Sollte die Bohrhülse zu tief in die Bohrschablone eingesetzt worden sein, so ist auch dies anhand der Messpunkte an den Messstiften für einen Arzt ohne weiteres erkennbar.

Bei einer abgewandelten Ausführungsform des Verfahrens werden in die Bohrhülsen Messstifte eingeführt und der Abstand der Enden der Messstifte zueinander beziehungsweise zu einem Referenzpunkt gemessen. Dabei wird die Messung in einem Abstand zu den Bohrhülsen durchgeführt, so dass die Abweichungen bei fehlerhafter Winkelanordnung besser erfassbar sind.

Bei einer bevorzugten Ausführungsform des Verfahrens ist die Länge der Messstifte vorbestimmt oder auf diesen ein Messpunkt festgelegt. Befinden sich die Enden der Messstifte oder deren Messpunkte nicht in einer Ebene, so ist daran feststellbar, dass die Axialposition einer oder mehrerer Bohrhülsen nicht korrekt ist.

Bei einer abgewandelten Ausführungsform des Verfahrens erfolgt die Erfassung eines Teils der Lageparameter oder abgeleiteten Lageparameter der Bohrhülsen mittels einer Kamera oder eines Flachbett- oder Laserscanners. Die Messebene fällt dann mit der Bildebene einer Kamera zusammen.

Weitere Ausführungsformen der verschiedenen Verfahren ergeben sich aus den jeweiligen Unteransprüchen.

Zur Lösung der genannten Aufgabe wird auch eine Vorrichtung mit den in Anspruch 22 genannten Merkmalen vorgeschlagen. Sie zeichnet sich durch die Erfassung eines Teils der Lageparameter oder abgeleiteten Lageparameter von Bohrhülsen in einer Bohrschablone in einem Abstand zu diesen aus. Mittels dieser Vorrichtung ist die Erfassung der genannten Parameter möglich, ohne dass die Bohrhülsen oder die Bohrschablone dabei störend sind.

Bevorzugt wird eine Vorrichtung, bei der eine Messebene vorgesehen ist, innerhalb derer die Erfassung der (abgeleiteten) Lageparameter erfolgt. Auf diese Weise ist es leicht möglich, die (abgeleiteten) Lageparameter mit einer Messung zu erfassen.

Bei einem bevorzugten Ausführungsbeispiel der Vorrichtung ist der Messebene eine Referenzaufnahme zugeordnet, die die Bohrschablone in einer vorgegebenen Ausrichtung und/oder in vorgebbarem Abstand zur Messebene hält. Es wird damit auf einfache Weise möglich, Messstifte durch die Bohrhülsen zu führen und deren Berührungspunkte mit Referenzpunkten in der Messebene zu vergleichen. Damit kann die korrekte Anordnung der Bohrhülsen problemlos erfasst werden.

Bei einer anderen Vorrichtung der hier angesprochenen Art ist vorgesehen, dass Messstifte durch die Bohrhülsen geführt werden und dass an diesen der Abstand zueinander oder zu einem Referenzpunkt in einem Abstand zu den Bohrhülsen abgegriffen wird, um einen Teil der Lageparameter beziehungsweise der abgeleiteten Lageparameter der Bohrhülsen zu erfassen. Auch hier ist es auf einfache Weise möglich, die Positionierung der Bohrhülsen zu prüfen.

Schließlich wird eine Ausführungsform der Vorrichtung bevorzugt, die sich dadurch auszeichnet, dass eine Kamera vorgesehen ist. Diese erfasst auf einfache Weise einen Teil der (abgeleiteten) Lageparameter der Bohrhülsen.

Weitere Ausführungsbeispiele der verschiedenen Vorrichtungen ergeben sich aus den Unteransprüchen.

Die Erfindung wird im Folgenden anhand der Zeichnungen näher erläutert. Es zeigen:
- Figur 1:: ein erstes Ausführungsbeispiel einer Vorrichtung zur Kontrolle der Position von in eine Bohrschablone eingesetzten Bohrhülsen;
- Figur 2:: eine Draufsicht auf ein im Zusammenhang mit einer Vorrichtung nach Figur 1 verwendetes Messblatt;
- Figur 3:: eine vergrößerte Darstellung einer Hülse und eines Messstifts;
- Figur 4:: ein weiteres Ausführungsbeispiel einer Vorrichtung zur Kontrolle der Position von Bohrhülsen und
- Figur 5:: ein weiteres Ausführungsbeispiel einer derartigen Vorrichtung.

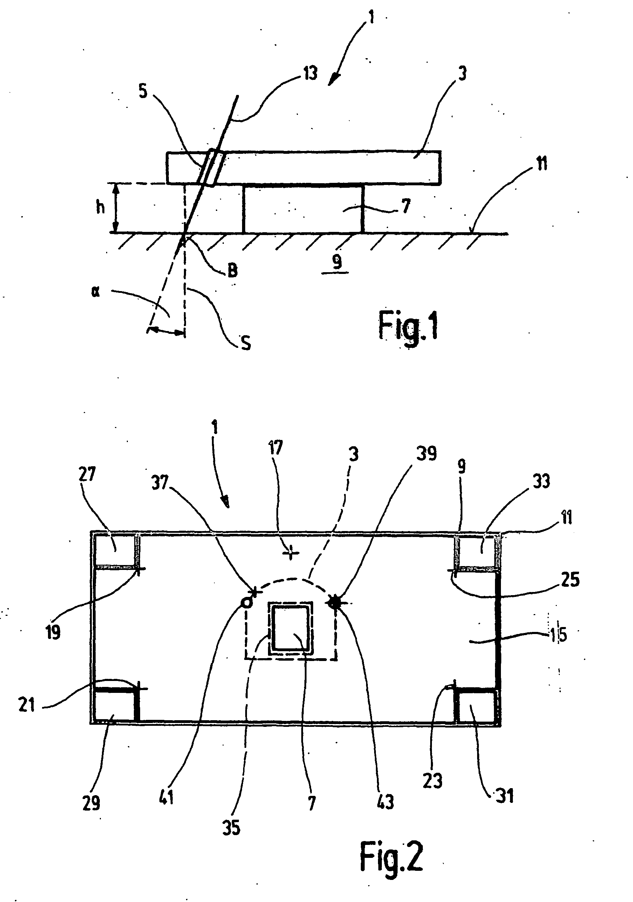

Das in Figur 1 dargestellte erste Ausführungsbeispiel einer Vorrichtung 1 zeigt eine Bohrschablone 3 mit einer Bohrhülse 5, die dazu dient, in einer gewünschten Winkelposition einen Bohrkanal in den Kiefer eines Patienten einzubringen. Die Anzahl der Bohrhülsen richtet sich danach, wie viele Implantate der Patient erhalten soll.

Die Bohrschablone 3 wird von einer im Folgenden als Referenzaufnahme 7 bezeichneten Halterung gehalten, die einer Basis 9 der Vorrichtung 1 zugeordnet, hier auf dieser aufgesetzt ist. Die Oberfläche der Basis 9 bildet die Messebene 11 der Vorrichtung 1.

Durch die Bohrhülse 5 ist ein Messstift 13 geführt, der auf der Messebene 11 aufliegt.

Aus Figur 1 ist ersichtlich, dass die Bohrhülse 5 unter einem Winkel α gegenüber einer gedachten Linie S angeordnet ist, die senkrecht auf der Messebene 11 steht. Entsprechend verläuft der Messstift 13 unter demselben Winkel α, unter dem die mit dem Messstift zusammenfallende Mittelachse der Bohrhülse 5 zur Linie S verläuft.

Die Referenzaufnahme 7 weist eine definierte Höhe h auf, in der die Bohrschablone 3 in einer vorgesehenen Ausrichtung über der Messebene 11 gehalten wird. Durch die Höhe h und den Winkel α der Bohrschablone 9 wird der Berührungspunkt B definiert, in dem der Messstift 13 die Messebene 11 berührt.

Figur 2 zeigt die in Figur 1 dargestellte Vorrichtung 1 in Draufsicht. Aus Gründen der Übersichtlichkeit wurde die Bohrschablone 3 weggelassen und lediglich durch eine punktierte Linie angedeutet.

Figur 2 zeigt, dass die Basis 9 der Vorrichtung 1 hier beispielsweise im Wesentlichen rechteckförmig ausgebildet ist. Entsprechend ist hier ein rechteckiges Messblatt 15 vorgesehen, das auf der Messebene 11 aufliegt.

Das Messblatt 15 ist mit einer ersten Markierung 17 versehen, die anzeigt, in welcher Orientierung die Bohrschablone 3 auf die Referenzaufnahme 7 aufgebracht werden soll. Beispielhaft ist hier vorgesehen, dass die erste Markierung 17 anzeigt, dass die Bohrschablone 3 so auf die Referenzaufnahme 7 aufzubringen ist, dass der den Frontzähnen des Patienten zugeordnete Teil der Bohrschablone 3 in Richtung dieser Markierung 17 zeigt. Natürlich ist es auch möglich, die Referenzaufnahme 7 so auszubilden, dass die Bohrschablone 3 nur in der hier angedeuteten Position auf die Referenzaufnahme 7 aufgebracht werden kann.

Das in der Messebene 11 liegende Messblatt 15 ist mit durch Kreuze gekennzeichneten Bezugspunkten 19, 21, 23 und 25 versehen, die hier in einem Abstand zu den jeweiligen Seitenkanten des Messblatts 15 im Bereich von dessen Ecken angeordnet sind. Entsprechend können die Ecken des Messblatts 15 ausgeschnitten sein und mit Positionierelementen 27, 29, 31, 33 zusammenwirken, die auf der Basis 9 beziehungsweise auf der Messebene 11 angeordnet sind. Die Positionierelemente können stiftförmig sein oder wie hier als rechteckförmige Anschlagelemente ausgebildet sein, die dazu dienen, das Messblatt 15 in einer exakten Position auf der Messebene 11 zu halten. Das Messblatt ist mit einer hier gestrichelt eingezeichneten Ausnehmung 35 versehen, die so groß und so ausgebildet ist, dass die Referenzaufnahme 7 ungehindert das Messblatt 15 durchgreifen kann.

Auf dem Messblatt 15 sind durch Kreuze gekennzeichnete Referenzpunkte 37 und 39 vorgesehen, die so angeordnet sind, dass sie mit den Berührungspunkten B übereinstimmen, in denen die Messstifte 13 das Messblatt 15 berühren, wenn die Bohrhülsen 5 in korrekter Winkelpositionierung in die Bohrschablone 3 eingebracht sind.

Durch Kreise sind in Figur 2 Berührungspunkte 41 und 43 eingezeichnet, in denen Bohrhülsen durchdringende Messstifte die Messebene 11, also das Messblatt 15, tatsächlich berühren würden, wenn eine Bohrschablone 3 mit Bohrhülsen 5 auf die Referenzaufnahme 7 aufgebracht würde.

Deutlich erkennbar ist hier in Figur 2, dass der Referenzpunkt 39 mit dem Berührungspunkt 43 zusammenfällt: Das Kreuz des Referenzpunkts 39 geht durch den gedachten Mittelpunkt des Berührungspunkts 43.

Es ist auch ersichtlich, dass der Referenzpunkt 37 und der Berührungspunkt 41 in einem Abstand zueinander angeordnet sind. Eine derartige Situation ergibt sich, wenn die Bohrhülse 5 unter einem falschen Winkel in die Bohrschablone 3 eingesetzt ist, so dass der Messstift 13 das Messblatt 15 nicht an dem vorausberechneten Ort trifft.

Die Referenzpunkte 37 und 39 werden mit Hilfe eines Programms berechnet, das die Sollausrichtung der in die Bohrschablone 3 eingesetzten Bohrhülsen 5, also deren Winkel α, und den Abstand h der Bohrschablone 5 zur Messebene 3 berücksichtigt, also die Höhe der Referenzaufnahme 7.

Die Berührungspunkte 41 und 43 können dadurch erzeugt werden, dass die Messstifte mit einem gewissen Druck auf das Messblatt 15 einwirken. Denkbar ist es aber auch, Messstifte zu verwenden, deren Spitze so ausgebildet ist, dass das Messblatt 15 im Bereich der Berührungspunkte 41 und 43 perforiert wird. Die Spitze kann aber einen Farbspender aufweisen, so dass das Messblatt 15 im Bereich der Berührungspunkte 41 und 43 angefärbt wird. Beispielsweise ist es möglich, als Messstifte 13 Kugelschreiberminen einzusetzen, deren Außendurchmesser so gewählt ist, dass diese durch die Bohrhülsen 5 hindurchgeführt werden können.

Das in Figur 2 dargestellte Ausführungsbeispiel kann noch folgendermaßen abgewandelt werden:

Das Messblatt 15 kann auch ohne die an den Ecken vorgesehenen und in Figur 2 dargestellten Ausschnitte hergestellt werden. Beispielsweise können von der Messebene 11 ausgehende durchsichtige Laschen vorgesehen werden, die über den Bereich des Messblatts 15 greifen und mit Markierungen versehen sind. Diese werden mit entsprechenden Bezugspunkten auf dem Messblatt 15 in Deckung gebracht, um dieses exakt auf der Messebene 11 zu positionieren. Diese Ausgestaltung erspart es dem Benutzer, in den Eckbereichen des Messblatts 15 Ausschnitte vorzusehen.

Entsprechend kann auch davon abgesehen werden, die Referenzaufnahme 7 auf der Messebene zu verankern. Auch hier kann ein vorzugsweise durchsichtiger Träger vorgesehen werden, der von dem Randbereich der Messebene bis zu der Position reicht, an der die Referenzaufnahme 7 positioniert werden soll. Das Messblatt kann dann unter den Träger geschoben werden und anhand der Bezugspunkte auf den durchsichtigen Laschen exakt positioniert werden. Der hier beschriebene Träger kann selbstverständlich auch mit der anhand von Figur 2 erläuterten Ausgestaltung kombiniert werden. Das Messblatt kann unter den Träger geschoben und mittels der Positionierelemente ausgerichtet werden, wie dies anhand von Figur 2 erläutert wurde.

Besonders vorteilhaft an dieser Abwandlung ist, dass ein Messblatt 15 ohne irgendwelche Ausschnitte exakt in der Messebene 11 positioniert werden kann, in dem es unter die durchsichtigen Laschen geschoben wird. Die Ausrichtung erfolgt, wie oben gesagt, dass Bezugspunkte auf dem Messblatt 15 mit Bezugspunkten auf den Laschen in Deckung gebracht werden. Gleichzeitig wird das Messblatt 15 unter den quasi freischwebend über der Messebene 11 angeordneten Träger mit der Referenzaufnahme 7 geschoben. Der Träger ist elastisch ausgebildet, so dass er bei der Kontrolle der Position der Bohrhülsen 5 ohne weiteres auf das Messblatt 15 gedrückt werden kann, um eine definierte Höhenlage gegenüber dem Messblatt 15 zu gewährleisten.

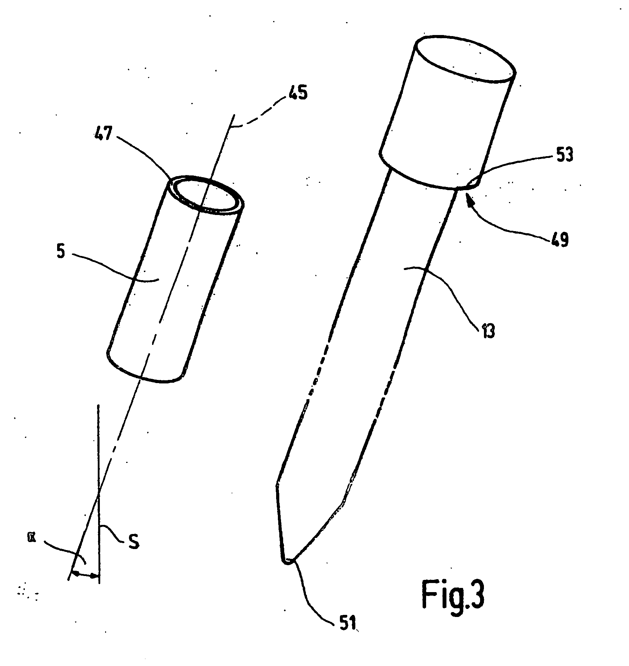

Figur 3 zeigt eine isolierte, nicht in eine Bohrschablone 3 eingesetzte Bohrhülse 5, deren Mittelachse 45 unter einem Winkel α zu einer gedachten Linie S geneigt ist.

Durch die Bohrhülse 5 hindurch wird zur Einbringung von Löchern in den Kieferknochen eines Patienten ein Bohrer geführt, dessen Außendurchmesser etwas kleiner ist als der Innendurchmesser der Bohrhülse 5. Dadurch dient diese als mechanische Führung des Bohrers, so dass dieser unter einem gewünschten Winkel α in den Kieferknochen des Patienten eindringt. Die Bohrlochtiefe wird dadurch bestimmt, dass der obere Rand 47 der Bohrhülse 5 als Anschlag für den Bohrer dient.

Um die axiale Positionierung der Bohrhülse 5 in einer Bohrschablone 3 zu prüfen, können die anhand der Figuren 1 und 2 erwähnten Messstifte 13 mit einem Messpunkt 49 versehen werden, der genau im Bereich des Randes 47 zu liegen kommt, wenn der Messstift mit seiner Spitze 51 im Berührungspunkt B auf der Messebene 11, also auf dem Messblatt 15 aufliegt. Um die Kontrolle der axialen Position der Messhülse 5 zu erleichtern, kann der Messpunkt 49 als Schulter 53 ausgebildet werden, also dergestalt, dass der Messstift 13 oberhalb des Messpunkts 49 einen größeren Außendurchmesser hat als unterhalb des Messpunkts. Der Messstift 13 ist also nur bis zur Schulter 53 durch die Bohrhülse 5 hindurchführbar. Sollte die Bohrhülse 5 zu weit oben in der Bohrschablone 3 angeordnet sein, kann der Messstift 13 die Messebene 11 und damit das Messblatt 15 nicht berühren, so dass sich kein ablesbarer Berührungspunkt ergibt.

Es ist also leicht erkennbar, ob die Bohrhülse 5 möglicherweise zu hoch in der Bohrschablone 3 angeordnet ist, so dass ein in den Kiefer des Patienten eingebrachtes Loch für ein Implantat nicht tief genug wäre.

Umgekehrt kann nach Einbringen der Messstifte 13 in eine Bohrhülse 5 ein Betrachter ohne weiteres feststellen, ob ein Messstift 13 tatsächlich mit seiner Schulter 53 auf dem Rand 47 einer Bohrhülse 5 aufliegt oder nicht. Sollte hier ein Abstand vorhanden sein, wäre die Bohrhülse 5 zu tief in die Bohrschablone 3 eingesetzt, so dass auch das in den Kieferknochen des Patienten eingebrachte Loch zu tief wäre und möglicherweise Nerven gefährdet wären oder eine Perforation der Nasennebenhöhle zu befürchten wäre.

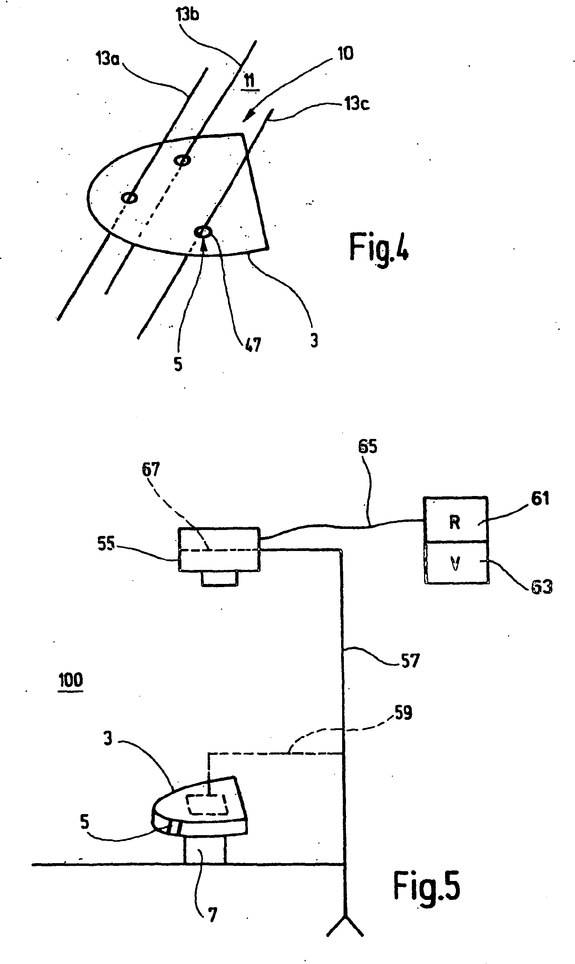

Figur 4 zeigt ein abgewandeltes Ausführungsbeispiel einer Vorrichtung 10 zur Kontrolle der Winkel- und/oder Axialposition von Bohrhülsen 5 in einer Bohrschablone 3, von denen hier lediglich der obere Rand 47 angedeutet ist. Durch die Bohrhülsen 5 sind Messstifte 13a, 13b und 13c geführt, um die Winkelposition der Bohrhülsen 5 innerhalb der Bohrschablone 3 zu erfassen.

Wird die Bohrschablone 3 in einem vorbestimmten Abstand über einer hier nicht dargestellten Unterlage angeordnet, liegen die Messstifte 13a, 13b und 13c auf der Unterlage auf und stehen eine gewisse Länge über die Bohrschablone 3 hinaus, so dass deren Enden für einen Betrachter zugänglich sind. Es ist nun möglich, in einer Messebene 11 den Abstand der Enden der Messstifte zueinander oder zu einem Referenzmesspunkt, der hier nicht dargestellt ist, zu bestimmen.

Die Bohrschablone 3 kann in einem bestimmten Abstand zu einer hier nicht dargestellten Unterlage angeordnet sein, so dass die Messstifte 13a, 13b und 13c auf dieser aufliegen. Wenn die Messstifte mit Messpunkten versehen sind, können diese mit der Position des Randes 47 der Bohrhülsen 5 verglichen werden, um die axiale Positionierung der Bohrhülsen zu kontrollieren. Es ist aber auch möglich, Messstifte mit einem Messpunkt 49 zu verwenden, der als Schulter 53 ausgebildet ist, wie dies anhand von Figur 3 erläutert wurde. Damit können die Messstifte auch ohne eine Unterlage in die Bohrhülsen eingeführt und der Abstand ihrer Enden erfasst werden.

Auch bei diesem Ausführungsbeispiel der Vorrichtung 10 kann die Winkelposition der Bohrhülsen in einem Abstand zur Bohrschablone 3 erfasst werden.

Zusätzlich kann geprüft werden, ob die Enden von mit einer Schulter 53 versehenen Messstiften in einer Ebene liegen. Sollte dies der Fall sein, lässt sich daraus ablesen, dass die Bohrhülsen 5 in einer gewünschten Tiefe in der Bohrschablone 3 liegen. Es ist dann lediglich erforderlich, die oberhalb der Schulter 53 verbleibende Länge der Messstifte so zu bestimmen, dass deren Enden in einer Ebene liegen.

Figur 5 zeigt ein weiteres Ausführungsbeispiel einer Vorrichtung 100 zur Kontrolle der Winkel- und/oder Axialposition von Bohrhülsen 5 in einer Bohrschablone 3.

Bei der hier dargestellten Vorrichtung 100 ist eine Kamera 55 vorgesehen, die von einer geeigneten Halterung 57 über einer Bohrschablone 3 angeordnet ist, die von einer Referenzaufnahme 7 gehalten wird, wie sie bereits anhand von Figur 1 erläutert wurde. Denkbar ist es aber auch, die Bohrschablone 3 mittels einer mit der Halterung 57 verbundenen Referenzaufnahme zu halten, die hier durch eine strichpunktierte Linie 59 angedeutet ist. Die Kamera 55 ist mit einer Recheneinheit 61 und mit einer Vergleichseinheit 63 versehen. Als Verbindung ist hier beispielsweise eine Leitung 65 angedeutet.

Die Vorrichtung 100 ist so ausgebildet, dass anstelle der Bohrschablone 3 zunächst ein hier nicht dargestellter Prüfkörper von der Referenzaufnahme 7 gehalten wird, der von der Kamera 55 aufgenommen wird. Aus dieser Aufnahme ist mit Hilfe der Recheneinheit 61 die Abbildungscharakteristik bestimmbar.

Nach Aufnahme des Prüfkörpers wird dieser entfernt und die Bohrschablone 3 an der Referenzaufnahme 7 befestigt. Es ist nun möglich, die in die Bohrschablone 3 eingesetzten Bohrhülsen 5 mit der Kamera 55 aufzunehmen und deren Anordnung innerhalb der Bohrschablone 3 zu erfassen.

Mit Hilfe eines Programms kann die Ist-Position der Bohrhülsen 5 mit der Soll-Position der Bohrhülsen 5 in der Vergleichseinheit 63 verglichen werden.

Im Folgenden wird auf die Funktion der verschiedenen Vorrichtungen und auf das Verfahren zur Kontrolle der Lage von Bohrhülsen 5 in Bohrschablonen 3 näher eingegangen:

Im Zusammenhang mit der Vorrichtung 1 gemäß Figur 1 wird ein Teil der Lageparameter beziehungsweise abgeleiteten Lageparameter erfasst, hier die Winkel- und/oder Axialposition von Bohrhülsen 5 in einer Bohrschablone 3 mit Hilfe von Messstiften 13. Diese werden durch die Bohrhülsen 5 hindurchgeführt, bis sie auf einer Messebene 11 aufliegen, in der ein Messblatt 15 angeordnet ist. Die Anordnung der Bohrschablone 3 und deren Höhe h über der Messebene 11 wird durch eine Referenzaufnahme 7 bestimmt, die eine exakte, vorbestimmte Ausrichtung der Bohrschablone 3 gegenüber dem Messblatt 15 vorgibt. Zur Bestimmung der Position der Bohrhülsen 5 werden also Messstifte durch diese hindurchgeführt und damit Berührungspunkte 41 und 43 auf dem Messblatt 15 festgelegt, sei es durch Spitzen der Messstifte 13, die das Messblatt 15 perforieren oder markieren, oder sei es mit Hilfe von Farbeinrichtungen, mit denen die Messstifte 13 ausgestattet sind.

Auf das Messblatt 15 werden mittels eines herkömmlichen Druckers Referenzpunkte 37 und 39 aufgedruckt, aber auch Bezugspunkte 19, 21, 23 und 25.

Durch die Bezugspunkte ist es möglich, die Lage des Messblatts 15 auf der Messebene 11 exakt vorzugeben. Die erwarteten Berührungspunkte, nämlich die Referenzpunkte 37 und 39 können bei bekannter Ist-Position der Hülsen 5 exakt vorbestimmt, das heißt vorausberechnet, und auf das Messblatt 15 aufgedruckt werden.

Die Messstifte 13 markieren das Messblatt 15 und es ist für einen Arzt ohne weiteres erkennbar, ob die Referenzpunkte und Berührungspunkte miteinander übereinstimmen. In Figur 2 ist beispielhaft dargestellt, dass der Referenzpunkt 37 und der Berührungspunkt 41 auseinanderfallen, dass also die Hülse, durch die ein Messstift geführt wurde, nicht in einer korrekten Winkelposition angeordnet ist. Aus der Übereinstimmung des Referenzpunkts 39 mit dem Berührungspunkt 43 lässt sich ohne weiteres ablesen, dass hier eine korrekt ausgerichtete Hülse 5 vorhanden ist.

Durch geeignete Messpunkte 49 an den Messstiften kann auch die axiale Positionierung der Bohrhülsen 5 kontrolliert werden: Es müssen die Messpunkte 49 genau mit dem Rand 47 einer jeden Bohrhülse 5 übereinstimmen. Eine Kontrolle ist besonders leicht dann durchführbar, wenn der Messpunkt 49 durch eine in Figur 3 dargestellte Schulter 53 realisiert wird. Ist die Hülse 5 zu hoch in der Bohrschablone 3 angeordnet, kann bei Durchführung des Verfahrens auf dem Messblatt 15 kein Berührungspunkt erzeugt und festgestellt werden. Damit lässt sich also eine falsche axiale Positionierung einer Bohrhülse 5 ermitteln. Sollte diese zu tief in der Bohrschablone 3 eingesetzt sein, würden der Rand 47 der Bohrhülse 5 und der Messpunkt 49 nicht übereinstimmen. Beispielsweise wäre die Schulter 53 in einem Abstand zum Rand 47 angeordnet. In diesem Fall ergäbe sich allerdings auf dem Messblatt 15 ein Berührungspunkt, der möglicherweise eine korrekte Winkelausrichtung der Bohrhülse 5 anzeigt.

Das Verfahren mittels der Vorrichtung 1 zeichnet sich dadurch aus, dass die gewünschten Referenzpunkte 37 und 39 einfach für verschiedenste Bohrschablonen 3 auf Messblätter 15 aufgedruckt werden können. Für einen Arzt kann die korrekte Winkel- und Axialposition einer oder mehrer Bohrhülsen 5 innerhalb einer Bohrschablone 3 leicht ermittelt werden, indem Messstifte durch Bohrhülsen geführt werden, so dass sich Markierungen, das heißt Berührungspunkte auf einer Messebene beziehungsweise auf einem in der Messebene 11 liegenden Messblatt 15 zeigen.

Dadurch, dass die Winkelposition der Bohrhülsen 5 nicht unmittelbar an der Bohrhülse selbst erfasst wird, sondern in einem Abstand dazu, zeigen sich Winkelabweichungen der Bohrhülsen sehr deutlich, was die Kontrolle der korrekten Position der Bohrhülsen sehr vereinfacht und Fehler mit hoher Sicherheit vermeidet.

Die in Figur 4 dargestellte Vorrichtung 10 ermöglicht ein Verfahren zur Kontrolle der Position von Bohrhülsen 5 innerhalb einer Bohrschablone 3, indem auch hier Messstifte 13a, 13b und 13c verwendet werden, die in die Bohrhülsen 5 einschiebbar sind. Entweder wird hier die Bohrschablone 3, wie anhand von Figur 1 erläutert, über einer Unterlage angeordnet. Es lassen sich dann die in einer Messebene 11 liegenden Enden der Messstifte leicht vermessen. Einerseits kann der Abstand der Messstifte zueinander oder zu einer Referenzstelle gemessen werden, andererseits lässt sich ermitteln, ob die Enden der Messstifte in einer Ebene liegen. Dies ist dann der Fall, wenn Messstifte mit Schultern 53 verwendet werden und der von der Schulter aus gemessene verbleibende Rest der Messstifte auf die axiale Position der Bohrhülse 5 in der Bohrschablone 3 abgestimmt ist. Vereinfacht ist es aber auch möglich, Messpunkte 49 an den Messstiften vorzusehen, um zu prüfen, ob diese Messpunkte 49 mit dem Rand 47 einer Bohrhülse 5 übereinstimmen. Diese Messung ist dann möglich, wenn die Bohrschablone 3 in einem definierten Abstand über einer Unterlage fixiert ist, wie dies anhand von Figur 1 erläutert wurde.

Schließlich kann das Verfahren zur Kontrolle der Position von in Bohrschablonen eingesetzten Bohrhülsen auch auf einfache Weise mit einer Vorrichtung 100 durchgeführt werden, die anhand von Figur 5 erläutert wurde.

Auch hier ist es möglich, die Winkel- und/oder Axialposition der Bohrhülsen 5 in einem Abstand zu diesen zu messen. Es ist also nicht erforderlich, die Position der Bohrhülsen 5 unmittelbar an der Bohrschablone 3 zu erfassen, was nicht immer einfach ist, weil diese häufig versenkt in der Bohrschablone untergebracht sind.

Bei Verwendung der Vorrichtung 100 nach Figur 5 wird ein hier nicht dargestellter Prüfkörper mit der Kamera 55 aufgenommen. Mit Hilfe einer Recheneinheit 61 kann bei Verwendung eines bekannten Prüfkörpers in einem ersten Schritt die Abbildungscharakteristik der Kamera 55 vorzugsweise vor jeder Aufnahme einer Bohrschablone berechnet werden. Damit lassen sich Abbildungsfehler eliminieren. Dieser erste Schritt kann bei geringeren Anforderungen an die Genauigkeit weggelassen werden, wenn die Abbildungscharak- teristik der Kamera bekannt ist.

Nachdem der Prüfkörper aufgenommen wurde, wird nun an dessen Stelle die Bohrschablone 3 in die Vorrichtung 100 eingesetzt, bei der die exakte Position einer oder mehrerer Bohrhülsen 5 erfasst werden soll.

Mit Hilfe der Kamera 55 wird ein Bild der Bohrschablone 3 mit einer oder mehreren Bohrhülsen 5 aufgenommen. Das Bild der Bohrschablone 3 liegt dann im Bereich der die Messebene bildende Bildebene 67 der Kamera 55. Das von der Kamera 55 aufgenommene Bild der Bohrschablone 3 kann mittels einer Vergleichseinheit 63 verglichen werden mit einem Bild, das mit Hilfe eines Computers aus der korrekten Positionierung der Bohrhülsen 5 innerhalb der Bohrschablone 3 berechnet wurde.

Der obere Rand 47 der Bohrhülsen 5 innerhalb der Bohrschablone 3 wird, sofern die Mittelachse der Bohrhülse nicht mit der optischen Achse der Kamera 55 zusammenfällt, nicht als Kreis abgebildet, sondern als Ellipse. Die Länge des längeren Durchmessers und die des kürzeren Durchmessers der Ellipse und die Anordnung der beiden Durchmesser werden einerseits bestimmt durch die Winkelanordnung einer Bohrhülse, andererseits dadurch, wie weit diese in axialer Richtung innerhalb der Bohrschablone 3 verschoben ist.

In der Vergleichseinheit 63 können die erfassten Werte für die Durchmesser der elliptischen Abbildung einer jeden Bohrhülse 5 verglichen werden mit den aus Computerberechnungen bestimmten Werten. Damit kann also die tatsächliche Winkel- und/oder Axialposition einer jeden Bohrhülse innerhalb der Bohrschablone erfasst und mit den Soll-Werten verglichen werden.

Anstelle einer Kamera kann auch ein Flachbett- oder Laserscanner verwendet werden.

Nach allem wird Folgendes deutlich:

Durch die verschiedenen anhand der Figuren 1 bis 5 dargestellten Vorrichtungen und mittels der hier beschriebenen Verfahren unter Verwendung der genannten Vorrichtungen wird es möglich, die Winkel- und/oder Axialposition einer oder mehrerer Bohrhülsen 5 in einer Bohrschablone 3 zu kontrollieren. Dabei wird in allen Fällen die Position der Bohrhülsen nicht unmittelbar an der Bohrschablone abgegriffen, wo die Hülsen nicht immer einfach zugänglich sind. Die Kontrolle ist also mit hoher Sicherheit durchführbar. Da die Messung insbesondere der Winkelposition der Hülsen in einem Abstand zu diesen erfolgt, werden Winkelfehler besonders sicher erfasst.

Durch die Verwendung von Messstiften, die durch die Bohrhülsen geführt werden, ist es auch möglich, die Axialposition der Bohrhülsen 5 einfach zu erfassen, indem auf den Messstiften Messpunkte 49 verwendet werden, die mit dem Rand 47 der Bohrhülsen verglichen werden. Besonders einfach ist es, den Messpunkt jeweils durch eine schulter 53 zu realisieren, die als Anschlag dient und auf dem Rand 47 einer Bohrhülse 5 aufliegt. Damit kann auch hier die exakte Axialposition der Bohrhülse in einem Abstand zu dieser gemessen und erfasst werden, was die Messungen und die Kontrolle erleichtert.

Auch ohne derartige Messstifte kann die exakte Positionierung der Hülsen erfasst werden, indem nämlich, wie anhand von Figur 5 erläutert, eine Vorrichtung 100 eingesetzt wird, die eine Kamera 55 umfasst. Die von dieser aufgenommenen Bilder von einer Bohrschablone 3 werden verglichen mit den mittels eines Computers anhand der Röntgenaufnahme von Patienten und der Planung der Position der Bohrhülse beziehungsweise Bohrlöcher berechneten Bildern. Aus den elliptischen Abbildungen der Ränder 47 einer Bohrhülse 5 kann deren axiale und winkelmäßige Position erfasst werden.

In allen Fällen wird erreicht, dass sich der Arzt nicht auf die exakte Herstellung einer Bohrschablone 3 ohne weiteres verlassen muss. Es wird ihm vielmehr die Möglichkeit gegeben, eine Bohrschablone vor deren Einsatz exakt zu prüfen und zu kontrollieren, um festzustellen, ob ein oder mehrere Bohrhülsen 5 in einer Bohrschablone 3 bezüglich ihrer Winkelposition und/oder bezüglich ihrer Axialposition korrekt in die Bohrschablone eingesetzt sind. Dabei ist es nach allem ausreichend, zur Kontrolle der Lage der Bohrhülsen 5 nur einen Teil der Lageparameter oder abgeleiteten Lageparameter der Bohrhülsen zu erfassen. Dies vereinfacht das Verfahren und führt dennoch zu einer hohen Sicherheit. Dadurch, dass hier die Winkel- und/oder Axialposition der Bohrhülsen erfasst wird, ergibt sich ein besonders einfaches und sicheres Verfahren. Die hier beschriebene Vorrichtung zeichnet sich außerdem durch einen einfachen Aufbau aus.

Es wird darauf hingewiesen, dass das hier dargestellte Verfahren zur Kontrolle der Position einer Bohrhülse 5 in einer Bohrschablone 3, welche in der Regel im Dentalbereich eingesetzt wird, Teil eines Verfahrens ist. Das gesamte Verfahren weist vorzugsweise die folgenden Schritte auf:
- Aufnehmen eines Abdrucks des Patientenkiefers,
- Anfertigen eines Gipsmodelles,
- Erstellung einer Bissschiene mit einer Referenzaufnahme 7,
- Anfertigung einer computerthomografischen Aufnahme (CT) mit getragener Bissschiene, wobei die aus der computerthomografischen Aufnahme gewonnenen Daten zur Erstellung eines 3D-Modells des Patientenkiefers verwendet werden, Speichern der Daten,
- Durchführung einer 3D-implantatplanung am Computer,
- Einbringen von Bohrhülsen 5 in die Bissschiene, zur Herstellung der Bohrschablone 3, wobei hierbei die Kontrolle der Position der Bohrhülse 5 mit dem Verfahren, welches in den Figuren 1 bis 5 beschrieben ist, erfolgt,
- Setzen der Bohrungen im Kiefer des Patienten mittels der Bohrschablone 3, vorzugsweise Bohren der Löcher im Kiefer des Patienten, indem mit dem Bohrer durch die Bohrhülsen 5 in der Bohrschablone 3 gebohrt wird.

Teil des gesamten Systems, welches das gesamte Verfahren durchführt ist sowohl die Planungssoftware, als auch eine Positioniereinrichtung, die nicht Gegenstand der vorliegenden Anmeldung ist. Insbesondere ist das vorangehend beschriebene Verfahren zur Kontrolle der Position der Bohrhülse 5 in der Bohrschablone 3 ein wesentlicher Teil des gesamten Verfahrens. Der Vorteil des dargestellten Verfahrens zur Kontrolle der Position der Bohrhülse 5 in der Bohrschablone 3 besteht darin, dass die Anzahl der Arbeitsschritte gegenüber herkömmlichen Verfahren reduziert ist und die Referenzmarkierung durch die Referenzpunkte vereinfacht wurde. Die Referenzmarkierung durch die Referenzpunkte 37 und 39 ist auf der Messebene positioniert und somit deutlich abgesetzt von dem Ort der Bohrhülsen 5. Vorteilhaft ist, dass die Referenzmarkierung gleichzeitig auch die mechanische Steckverbindung der Referenzaufnahme 7 umfasst und somit eine manuelle optische Abschätzung und eine manuelle optischer Ausrichtung nicht mehr notwendig ist. Insbesondere wird hierzu auf Figur 2 und die dazugehörige Figurenbeschreibung verwiesen, die die Referenzpunkte 37 und 39 auf dem Messblatt 15 in der Messebene 11 zeigt. Somit wird deutlich, dass die Referenzaufnahme 7 einen direkten Bezug zu den Referenzpunkten 37 und 39 aufweist und eine exakte und vorher bestimmte Ausrichtung der Bohrschablone 3 gegenüber dem Messblatt 15 gewährleistet.

Besonders hingewiesen wird an dieser Stelle auf die Bedeutung der in Figur 1 und 2 dargestellten und beschriebenen Referenzaufnahme 7, die sowohl in dem Gipsmodell, als auch in der angefertigten Bissschiene und damit auch in der Bohrschablone 3 immer dieselbe Referenzaufnahme 7 ist. Durch die Verwendung dieser Referenzaufnahme 7 ist eine reproduzierbare Positionierbarkeit der Bohrschablone auf der Messebene 11 beziehungsweise auf dem Messblatt 15 gewährleistet. Ebenfalls sichert diese Referenzaufnahme 7 die reproduzierbare Positionierung der Bohrschablone 3 auf einer Positionier- und Bohrvorrichtung, mit Hilfe dieser die Bohrhülsen 5 letztendlich in die Bohrschablone 3 eingesetzt und ausgerichtet werden.

## Patentansprüche

1. Verfahren zur Kontrolle der Position von in eine Bohrschablone eingesetzten Bohrhülsen, wobei ein Teil der Lageparameter oder der abgeleiteten Lageparameter der Bohrhülsen (5) in einem Abstand zu diesen gemessen wird, **dadurch gekennzeichnet, dass** Lageparameter oder abgeleiteten Lageparameter vorzugsweise die Winkel- und/oder Axialposition auf eine Messebene (11) übertragen werden, dass der Messebene (11) eine Referenzaufnahme (7) zugeordnet wird, und dass die Referenzaufnahme (7) die Bohrschablone (3) in vorgegebener Ausrichtung und/oder in vorgebbarem Abstand zur Messebene (11) hält.

2. Verfahren nach Anspruch 1, **dadurch gekennzeichnet, dass** in der Messebene (11) Referenzpunkte (37, 39) vorgesehen werden.

3. Verfahren nach Anspruch 1 oder 2, **dadurch gekennzeichnet, dass** durch die Bohrhülsen (5) Messstifte (13;13a,13b,13c) geführt werden.

4. Verfahren nach einem der vorhergehenden Ansprüche, **dadurch gekennzeichnet, dass** die Messstifte (13;13a,13b,13c) mit Messpunkten (49) versehen werden.

5. Verfahren nach einem der vorhergehenden Ansprüche, **dadurch gekennzeichnet, dass** Berührungspunkte (41, 43) der Messstifte (13;13a,13b,13c) mit der Messebene (11) mit den Referenzpunkten (37, 39) verglichen werden.

6. Verfahren nach einem der vorhergehenden Ansprüche, **dadurch gekennzeichnet, dass** geprüft wird, ob die Messstifte (13;13a,13b,13c) die Messebene (11) berühren.

7. Verfahren nach einem der vorhergehenden Ansprüche, **dadurch gekennzeichnet, dass** die Referenzpunkte(37, 39) auf einem Messblatt (15) vorgegeben werden.

8. Verfahren nach einem der vorhergehenden Ansprüche, **dadurch gekennzeichnet, dass** die Referenzpunkte (37, 39) mittels eines Druckers erzeugt werden.

9. Verfahren nach einem der vorhergehenden Ansprüche, **dadurch gekennzeichnet, dass** das Messblatt (15) Bezugspunkte (19, 21, 23, 25) enthält.

10. Verfahren nach einem der vorhergehenden Ansprüche, **dadurch gekennzeichnet, dass** den Bezugspunkten die Positionselemente (27, 29, 31, 33) zugeordnet werden.

11. Verfahren nach einem der vorhergehenden Ansprüche, **dadurch gekennzeichnet, dass** in die Bohrhülsen (5) Messstifte (13;13a,13b,13c) eingeführt werden und in einem Abstand zu den Bohrhülsen (5) der Abstand der Messstifte zueinander und/oder zu einem Referenzpunkt gemessen wird.

12. Verfahren nach einem der vorhergehenden Ansprüche, **dadurch gekennzeichnet, dass** die Länge der Messstifte (13;13a,13b,13c) vorbestimmt und/oder ein Messpunkt auf diesen festgelegt wird.

13. Verfahren nach einem der vorhergehenden Ansprüche, **dadurch gekennzeichnet, dass** nur der Abstand der Messstifte (13;13a,13b,13c) erfasst wird, deren Enden oder deren Messpunkte in der Messebene (11) liegen.

14. Verfahren nach einem der vorhergehenden Ansprüche, **dadurch gekennzeichnet, dass** die Messebene (11) der Bildebene (67) einer Kamera (55) zugeordnet wird.

15. Verfahren nach einem der vorhergehenden Ansprüche, **dadurch gekennzeichnet, dass** mit der Kamera (55) ein von einer Referenzaufnahme (7) gehaltener Prüfkörper aufgenommen und mittels einer Recheneinheit (61) die Abbildungscharakteristik der Kamera (55) berechnet wird.

16. Verfahren nach einem der vorhergehenden Ansprüche, **dadurch gekennzeichnet, dass** anstelle der Kamera auch ein Flachbett- oder Laserscanner eingesetzt wird.

17. Verfahren nach einem der vorhergehenden Ansprüche, **dadurch gekennzeichnet, dass** die Soll-Position der Bohrhülsen (5) berechnet wird.

18. Verfahren nach einem der vorhergehenden Ansprüche, **dadurch gekennzeichnet, dass** eine von der Referenzaufnahme (7) gehaltene Bohrschablone (3) aufgenommen und die Ist-Position der Bohrhülsen (5) mit der Soll-Position mittels einer Vergleichseinheit (63) verglichen wird.

19. Vorrichtung zur Kontrolle der Position von in eine Bohrschablone eingesetzten Bohrhülsen (5), insbesondere zur Durchführung eines Verfahrens nach einem der Ansprüche 1 bis 18, wobei ein Teil der Lageparameter oder der abgeleiteten Lageparameter der Bohrhülsen (5) in einem Abstand zu diesen erfassbar ist, **gekennzeichnet durch**
- eine Messebene (11), der eine Referenzaufnahme (7) für die Bohrschablone (3) zugeordnet ist,
- eine Basis (9), deren Oberfläche die Messebene (11) bildet,
- Messstifte (13), die **durch** die Bohrhülsen (5) führbar sind, zur Übertragung von Lageparametern oder abgeleiteten Lageparametem auf die Messebene (11), und
- eine Halterung (7) zur Lagerung der Bohrschablone (3), die eine definierte Höhe aufweist und als Referenzaufnahme dient.

20. Vorrichtung nach Anspruch 19, **dadurch gekennzeichnet, dass** in der Messebene (11) Referenzpunkte (37,39) anordenbar sind.

21. Vorrichtung nach einem der Ansprüche 19 oder 20, **dadurch gekennzeichnet, dass** die Messstifte (13;13a,13b,13c) mit Messpunkten (49) versehbar sind.

22. Vorrichtung nach einem der vorhergehenden Ansprüche 19 bis 21, **gekennzeichnet durch** ein in der Messebene (11) anordenbares Messblatt (15).

23. Vorrichtung nach einem der vorhergehenden Ansprüche 19 bis 22, **dadurch gekennzeichnet, dass** die Referenzpunkte (37,39) auf dem Messblatt (15) anordenbar sind.

24. Vorrichtung nach einem der vorhergehenden Ansprüche 19 bis 23, **dadurch gekennzeichnet, dass** Bezugspunkte (19, 21, 23, 25) und/oder die Referenzpunkte (37,39) mittels eines Druckers auf das Messblatt (15) aufbringbar sind.

25. Vorrichtung nach einem der vorhergehenden Ansprüche 19 bis 24, **dadurch gekennzeichnet, dass** die Messebene (11) den Bezugspunkten (19, 21, 23, 25) zuordenbare Positionierungselemente (27, 29, 31, 33) aufweist.

26. Vorrichtung nach einem der Ansprüche 19 bis 25, **dadurch gekennzeichnet, dass** an den Messstiften (13;13a,13b,13c) die Winkel- und/oder Axialposition der Bohrhülsen (5) abgreifbar ist.

27. Vorrichtung nach Anspruch 26, **dadurch gekennzeichnet, dass** die Länge der Messstifte (13; 13a,13b,13c) vorbestimmbar und/oder ein Messpunkt (49) auf diesen festlegbar ist.

28. Vorrichtung zur Kontrolle der Position von in eine Bohrschablone eingesetzten Bohrhülsen, insbesondere zur Durchführung eines Verfahrens nach einem der Ansprüche 1 bis 18, wobei ein Teil der Lageparameter oder der abgeleiteten Lageparameter der Bohrhülsen (5) in einem Abstand zu diesen erfassbar ist, **gekennzeichnet durch**
- eine Kamera (55), oder einen Flachbett- oder Laserscanner,
- eine Halterung (7) für die Bohrschablone (3),
- eine Halterung (57) für die Kamera (55),
- eine Recheneinheit (61), zur Bestimmung der Soll-Position der Bohrhülsen (5);
- eine Vergleichseinheit (63), welche die Ist-Position der Bohrhülsen (5) in einer Bohrschablone (3) mit deren Soll-Position vergleicht.

29. Vorrichtung nach Anspruch 28, **dadurch gekennzeichnet, dass** die Halterung (7) als Referenzaufnahme ausgebildet ist.

30. Vorrichtung nach einem der Ansprüche 28 oder 29, **gekennzeichnet durch** einen Prüfkörper.

## Claims

1. A method for controlling the position of bore bushings fitted into a drilling template, some of the position parameters or of the derived position parameters of the bore bushings (5) being measured at a distance from these bore bushings (5), **characterized in that** position parameters or derived position parameters, preferably the angle position and/or axial position, are transferred to a measurement plane (11), **in that** a reference seat (7) is assigned to the measurement plane (11), and **in that** the reference seat (7) holds the drilling template (3) in a predetermined orientation and/or at a predeterminable distance with respect to the measurement plane (11).

2. The method according to claim 1, **characterized in that** reference points (37, 39) are provided in the measurement plane (11).

3. The method according to claim 1 or 2, **characterized in that** measurement pins (13; 13a, 13b, 13c) are guided through the bore bushings (5).

4. The method according to one of the preceding claims, **characterized in that** the measurement pins (13; 13a, 13b, 13c) are provided with measurement points (49).

5. The method according to one of the preceding claims, **characterized in that** contact points (41, 43) of the measurement pins (13; 13a, 13b, 13c) with the measurement plane (11) are compared to the reference points (37, 39).

6. The method according to one of the preceding claims, **characterized in that** a check is carried out to establish whether the measurement pins (13; 13a, 13b, 13c) touch the measurement plane (11).

7. The method according to one of the preceding claims, **characterized in that** the reference points (37, 39) are predetermined on a measurement sheet (15).

8. The method according to one of the preceding claims, **characterized in that** the reference points (37, 39) are generated by means of a printer.

9. The method according to one of the preceding claims, **characterized in that** the measurement sheet (15) contains locating points (19, 21, 23, 25).

10. The method according to one of the preceding claims, **characterized in that** the position elements (27, 29, 31, 33) are assigned to the locating points.

11. The method according to one of the preceding claims, **characterized in that** measurement pins (13; 13a, 13b, 13c) are inserted into the bore bushings (5), and the distance of the measurement pins from one another and/or from a reference point is measured at a distance from the bore bushings (5).

12. The method as claimed in one of the preceding claims, **characterized in that** the length of the measurement pins (13; 13a, 13b, 13c) is predefined and/or a measurement point is fixed on these.

13. The method according to one of the preceding claims, **characterized in that** the distance is determined only for those measurement pins (13; 13a, 13b, 13c) whose ends or whose measurement points lie in the measurement plane (11).

14. The method according to one of the preceding claims, **characterized in that** the measurement plane (11) is assigned to the image plane (67) of a camera (55).

15. The method according to one of the preceding claims, **characterized in that** a test specimen held by a reference seat (7) is recorded by the camera (55) and the imaging characteristics of the camera (55) are calculated by means of a computing unit (61).

16. The method according to one of the preceding claims, **characterized in that**, instead of the camera, a flatbed or laser scanner is also used.

17. The method according to one of the preceding claims, **characterized in that** the desired position of the bore bushings (5) is calculated.

18. The method according to one of the preceding claims, **characterized in that** a drilling template (3) held by the reference seat (7) is recorded, and the actual position of the bore bushings (5) is compared with the desired position by means of a comparison unit (63).

19. A device for controlling the position of bore bushings (5) fitted into a drilling template, in particular for carrying out the method as claimed in one of claims 1 through 18, some of the position parameters or of the derived position parameters of the bore bushings (5) being detectable at a distance from these bore bushings (5), **characterized by**
- a measurement plane (11) to which a reference seat (7) for the drilling template (3) is assigned,
- a base (9), the surface of which forms the measurement plane (11),
- measurement pins (13) which can be guided through the bore bushings (5) for transferring position parameters or derived position parameters to the measurement plane (11), and
- a holder (7) for bearing the drilling template (3), the latter having a defined height and serving as reference seat.

20. The device according to claim 19, **characterized in that** reference points (37, 39) can be arranged in the measurement plane (11).

21. The device according to one of preceding claims 19 or 20, **characterized in that** the measurement pins (13; 13a, 13b, 13c) can be provided with measurement points (49).

22. The device according to one of preceding claims 19 through 21, **characterized by** a measurement sheet (15) which can be arranged in the measurement plane (11).

23. The device according to one of preceding claims 19 through 22, **characterized in that** the reference points (37, 39) can be arranged on the measurement sheet (15).

24. The device as claimed in one of claims 19 through 23, **characterized in that** marker points (19, 21, 23, 25) and/or the reference points (37, 39) can be applied to the measurement sheet (15) by means of a printer.

25. The device according to one of preceding claims 19 through 24, **characterized in that** the measurement plane (11) has positioning elements (27, 29, 31, 33) which can be assigned to the locating points (19, 21, 23, 25).

26. The device according to one of claims 19 through 25, **characterized in that** the angle position and/or axial position of the bore bushings (5) can be detected on the measurement pins (13; 13a, 13b, 13c).

27. The device according to claim 26, **characterized in that** the length of the measurement pins (13; 13a, 13b, 13c) can be predefined and/or a measurement point (49) can be fixed on these.

28. A device for controlling the position of bore bushings fitted into a drilling template, in particular for carrying out the method according to one of claims 1 through 18, some of the position parameters or of the derived position parameters of the bore bushings (5) being detectable at a distance from these bore bushings (5), **characterized by**
- a camera (55) or a flatbed or laser scanner,
- a holder (7) for the drilling template (3),
- a holder (57) for the camera (55),
- a computing unit (61) for determining the desired position of the bore bushing (5);
- a comparison unit (63) operable to compare the actual position of the bore bushing (5) in a drilling template (3) with the desired position of the bore bushing.

29. The device according to claim 28, **characterized in that** the holder (7) is formed as reference seat.

30. The device according to one of claims 28 or 29, **characterized by** a test specimen.

## Revendications

1. Procédé de contrôle de la position de douilles de forage insérées dans un gabarit de perçage, dans lequel une partie des paramètres de position ou des paramètres de position dérivés des douilles de forage (5) est mesurée à distance de celles-ci, **caractérisé en ce que** des paramètres de position ou paramètres de position dérivés, de préférence la position angulaire et/ou la position axiale, sont reportés sur un plan de mesure (11), qu'un logement de référence (7) est associé au plan de mesure (11) et que le logement de référence (7) tient le gabarit de perçage (3) dans l'alignement prédéfini et/ou à une distance prédéfinissable du plan de mesure (11).

2. Procédé selon la revendication 1, **caractérisé en ce que** des points de référence (37, 39) sont prévus dans le plan de mesure (11).

3. Procédé selon la revendication 1 ou 2, **caractérisé en ce que** des tiges de mesure (13 ; 13a, 13b, 13c) sont passées à travers les douilles de forage (5).

4. Procédé selon l'une quelconque des revendications précédentes, **caractérisé en ce que** les tiges de mesure (13 ; 13a, 13b, 13c) sont munies de points de mesure (49).

5. Procédé selon l'une quelconque des revendications précédentes, **caractérisé en ce que** des points de contact (41, 43) des tiges de mesure (13 ; 13a, 13b, 13c) avec le plan de mesure (11) sont comparés aux points de référence (37, 39).

6. Procédé selon l'une quelconque des revendications précédentes, **caractérisé en ce qu'**il est vérifié si les tiges de mesure (13 ; 13a, 13b, 13c) touchent le plan de mesure (11).

7. Procédé selon l'une quelconque des revendications précédentes, **caractérisé en ce que** les points de référence (37, 39) sont prédéfinis sur une feuille de mesure (15).

8. Procédé selon l'une quelconque des revendications précédentes, **caractérisé en ce que** les points de référence (37, 39) sont générés au moyen d'une imprimante.

9. Procédé selon l'une quelconque des revendications précédentes, **caractérisé en ce que** la feuille de mesure (15) contient des points de repère (19, 21, 23, 25).

10. Procédé selon l'une quelconque des revendications précédentes, **caractérisé en ce que** les éléments de positionnement (27, 29, 31, 33) sont associés aux points de repère.

11. Procédé selon l'une quelconque des revendications précédentes, **caractérisé en ce que** des tiges de mesure (13 ; 13a, 13b, 13c) sont introduites dans les douilles de forage (5) et la distance des tiges de mesure entre elles et/ou par rapport à un point de référence est mesurée à une distance des douilles de forage (5).

12. Procédé selon l'une quelconque des revendications précédentes, **caractérisé en ce que** la longueur des tiges de mesure (13 ; 13a, 13b, 13c) est prédéterminée et/ou un point de mesure est fixé sur celles-ci.

13. Procédé selon l'une quelconque des revendications précédentes, **caractérisé en ce que** seule la distance des tiges de mesure (13 ; 13a, 13b, 13c) dont les extrémités ou dont les points de mesure sont situés dans le plan de mesure (11) est déterminée.

14. Procédé selon l'une quelconque des revendications précédentes, **caractérisé en ce que** le plan de mesure (11) est associé au plan de l'image (67) d'une caméra (55).

15. Procédé selon l'une quelconque des revendications précédentes, **caractérisé en ce qu'**une éprouvette tenue par un logement de référence (7) est enregistrée avec la caméra (55) et la caractéristique de reproduction de la caméra (55) est calculée au moyen d'une unité de calcul (61).

16. Procédé selon l'une quelconque des revendications précédentes, **caractérisé en ce qu'**un scanner à plat ou à laser est aussi utilisé au lieu de la caméra.

17. Procédé selon l'une quelconque des revendications précédentes, **caractérisé en ce que** la position de consigne des douilles de forage (5) est calculée.

18. Procédé selon l'une quelconque des revendications précédentes, **caractérisé en ce qu'**un gabarit de perçage (3) tenu par le logement de référence (7) est enregistré et que la position réelle des douilles de forage (5) est comparée à la position de consigne au moyen d'une unité de comparaison (63).

19. Dispositif de contrôle de la position de douilles de forage (5) insérées dans un gabarit de perçage, en particulier pour la mise en oeuvre d'un procédé selon l'une quelconque des revendications 1 à 18, dans lequel une partie des paramètres de position ou des paramètres de position dérivés des douilles de forage (5) peut être déterminée à une distance de celles-ci, **caractérisé par**
- un plan de mesure (11), auquel est associé un logement de référence (7) pour le gabarit de perçage (3),
- une base (9), dont la surface forme le plan de mesure (11),
- des tiges de mesure (13), qui peuvent passer à travers les douilles de forage (5), pour reporter des paramètres de position ou des paramètres de position dérivés sur le plan de mesure (11), et
- un support (7) pour le montage du gabarit de perçage (3), qui présente une hauteur définie et sert de logement de référence.

20. Dispositif selon la revendication 19, **caractérisé en ce que** des points de référence (37, 39) peuvent être disposés dans le plan de mesure (11).

21. Dispositif selon l'une quelconque des revendications 19 ou 20, **caractérisé en ce que** les tiges de mesure (13 ; 13a, 13b, 13c) peuvent être munies de points de mesure (49).

22. Dispositif selon l'une quelconque des revendications précédentes 19 à 21, **caractérisé par** une feuille de mesure (15) pouvant être disposée dans le plan de mesure (11).

23. Dispositif selon l'une quelconque des revendications précédentes 19 à 22, **caractérisé en ce que** les points de référence (37, 39) peuvent être disposés sur la feuille de mesure (15).

24. Dispositif selon l'une quelconque des revendications précédentes 19 à 23, **caractérisé en ce que** des points de repère (19, 21, 23, 25) et/ou les points de référence (37, 39) peuvent être apposés sur la feuille de mesure (15) au moyen d'une imprimante.

25. Dispositif selon l'une quelconque des revendications précédentes 19 à 24, **caractérisé en ce que** le plan de mesure (11) présente des éléments de positionnement (27, 29, 31, 33) pouvant être associés aux points de repère (19, 21,23,25).

26. Dispositif selon l'une quelconque des revendications 19 à 25, **caractérisé en ce que** la position angulaire et/ou la position axiale des douilles de forage (5) peut être relevée sur les tiges de mesure (13 ; 13a, 13b, 13c).

27. Dispositif selon la revendication 26, **caractérisé en ce que** la longueur des tiges de mesure (13 ; 13a, 13b, 13c) peut être prédéterminée et/ou un point de mesure (49) peut être fixé sur celles-ci.

28. Dispositif de contrôle de la position de douilles de forage insérées dans un gabarit de perçage, en particulier pour la mise en oeuvre d'un procédé selon l'une quelconque des revendications 1 à 18, dans lequel une partie des paramètres de position ou des paramètres de position dérivés des douilles de forage (5) peut être déterminée à une distance de celles-ci, **caractérisé par**
- une caméra (55), ou un scanner à plat ou à laser,
- un support (7) pour le gabarit de perçage (3),
- un support (57) pour la caméra (55),
- une unité de calcul (61) pour déterminer la position de consigne des douilles de forage (5) ;
- une unité de comparaison (63) qui compare la position réelle des douilles de forage (5) dans un gabarit de perçage (3) à la position de consigne de celles-ci.

29. Dispositif selon la revendication 28, **caractérisé en ce que** le support (7) est réalisé sous la forme de logement de référence.

30. Dispositif selon l'une quelconque des revendications 28 ou 29, **caractérisé par** une éprouvette.
